# EUROPEAN PATENT SPECIFICATION

(11) **EP 4 583 272 B1**
(45) Date of publication and mention of the grant of the patent: **15.04.2026**
(21) Application number: 25150197.9
(22) Date of filing: 03.01.2025
(51) Int. Cl.: H01M 50/209, H01M 50/502, H01M 50/503, H01M 50/507

(54) **BATTERY ASSEMBLY**
BATTERIEANORDNUNG
ENSEMBLE BATTERIE

(30) Priority: 04.01.2024 KR 20240001573
(43) Date of publication of application: 09.07.2025
(73) Proprietor: SK On Co., Ltd., Seoul 03161 (KR)
(72) Inventor: HWANG, Won Gab, 34124 Daejeon (KR); LEE, Gang U, 34124 Daejeon (KR); NA, Chae Won, 34124 Daejeon (KR); HAN, Kyu Hyun, 34124 Daejeon (KR)
(74) Representative: Prüfer & Partner mbB Patentanwälte · Rechtsanwälte

(56) References cited:
- WO-A1-2021/002626
- WO-A1-2023/239216
- JP-A- 2023 534 415

## Description

### BACKGROUND OF THE INVENTION

### 1. Field

The present disclosure relates to a battery assembly.

### 2. Description of the Related Art

A secondary battery is a battery that is made to convert electrical energy into chemical energy and store it so that it may be reused multiple times through charging and discharging. Secondary batteries are widely used across industries due to their economical and eco-friendly characteristics. In particular, among secondary batteries, lithium secondary batteries are widely used throughout industries, including portable devices that require high-density energy.

The operating principle of lithium secondary batteries is an electrochemical oxidation-reduction reaction. In other words, the principle is that electricity is generated through the movement of lithium ions and charged in the reverse process. In the case of a lithium secondary battery, a phenomenon in which lithium ions in an anode escape therefrom and move to a cathode through an electrolyte and a separator is referred to as discharge. In addition, the opposite process of this phenomenon is referred to as charging.

Secondary batteries may generate a large amount of heat when charged and discharged. When the heat generated inside is not quickly extinguished, the fire may propagated to adjacent battery cells, causing major damage. Therefore, one of the major tasks is to quickly extinguish the heat generated inside a secondary battery and prevent the propagation of fire.

In order to achieve high-capacity and high-output properties, a plurality of secondary batteries may be grouped together to manufacture a battery module or battery pack (see for example WO2021002626A1, WO20203239216A1, JP2023534415A). At this time, a fire that occurs in one of the plurality of secondary batteries may cause the battery module or battery pack to burn completely. Therefore, it is necessary to prevent this risk.

### SUMMARY OF THE INVENTION

A problem that the present disclosure aims to solve is to improve the stability of a battery assembly by delaying the propagation of fire to adjacent battery cells.

In addition, the present disclosure can be widely applied in the field of green technology, such as electric vehicles, battery charging stations, solar power generation, and wind power generation using batteries.

In addition, the present disclosure can be used in eco-friendly electric vehicles, hybrid vehicles, and the like to prevent climate change by suppressing air pollution and greenhouse gas emissions.

A battery assembly of the present disclosure includes: a plurality of battery cells, which each include a main body portion storing and supplying electric energy and a tab portion protruding outwardly from the main body portion and electrically connecting the main body portion and the outside and are stacked along one direction; an accommodating housing accommodating the plurality of battery cells therein; a busbar assembly positioned inside the accommodating housing and including a through-hole formed on one surface thereof, wherein the tab portion is inserted into the through-hole to electrically connect at least a part of the plurality of battery cells to each other; and a pillar-shaped flame retardant portion positioned in an insertion space formed between the main body portion and the busbar assembly by tab portions of two adjacent battery cells among the plurality of battery cells.

The accommodating housing may include: an accommodating body supporting the plurality of battery cells; and an accommodating cover coupled to the accommodating body and covering the plurality of battery cells, and the flame retardant portion may be positioned on the accommodating body.

The flame retardant portion may be in contact with the accommodating body.

The length of the flame retardant portion may be less than or equal to the length of the main body portion along the height direction formed perpendicular to the protruding direction of the tab portion and the stacking direction in which the plurality of battery cells are stacked.

The length of the flame retardant portion may be 80% or more of the length of the main body portion along the height direction formed perpendicular to the protruding direction of the tab portion and the stacking direction in which the plurality of battery cells are stacked.

The length of the flame retardant portion may be less than or equal to a gap between tab portions provided in each of two adjacent battery cells among the plurality of battery cells along the stacking direction in which the plurality of battery cells are stacked.

The flame retardant portion may include: a head portion formed at one end; a floor portion formed at the other end opposite to the one end; and a body portion connecting the head portion and the floor portion, and the head portion and the floor portion may have a shape in which the cross-sectional area decreases along the direction toward each of the outermost sides of the body portion.

The head portion and the floor portion may each include one flat surface formed perpendicular to the direction in which the body portion extends.

The head portion and the floor portion may each include a cone shape having one truncated end including a vertex.

The head portion may have the same shape as the floor portion.

The body portion may have an outer surface formed into a curved surface.

The body portion may be provided in the form of a cylinder.

The flame retardant portion may include a material having a flame retardancy rating of V0 or higher according to UL94 standards.

The flame retardant portion may include at least one material of flame retardant polyurethane, silicone, modified polyphenylene oxide (MPPO), polypropylene, polyoxymethylene, acetal, polyamide 6, polyamide 6-6, and polycarbonate .

According to one embodiment of the present disclosure, the stability of a battery assembly can be improved by delaying the propagation of fire to adjacent battery cells.

### BRIEF DESCRIPTION OF THE DRAWINGS

FIG. 1 shows a diagram illustrating a battery cell according to one embodiment of the present disclosure.
FIG. 2 shows a diagram illustrating a battery assembly according to one embodiment of the present disclosure.
FIGS. 3 and 4 show diagrams illustrating one cross-section of a battery assembly according to one embodiment of the present disclosure.
FIG. 5 shows a diagram illustrating a battery cell and a flame retardant portion according to one embodiment of the present disclosure.
FIG. 6 shows a diagram illustrating a flame retardant portion according to one embodiment of the present disclosure.
FIG. 7 shows a diagram illustrating a head portion according to one embodiment of the present disclosure.

### DETAILED DESCRIPTION

Hereinafter, the present disclosure will be described in detail with reference to the attached drawings. This is merely illustrative, and the present disclosure is not limited to the specific embodiments described in an illustrative manner.

Specific terms used in the present specification are merely for convenience of explanation and are not used to limit the illustrated embodiments.

For example, expressions such as "same" and "is the same" not only indicate a strictly identical state, but also indicate a state in which there is a difference in tolerance or the degree to which the same function is obtained.

For example, expressions representing relative or absolute arrangement such as "in a certain direction," "along a certain direction," "side by side," "perpendicularly," "at the center," "concentric," or "coaxial," not only strictly represent the arrangement, but also represent the state of relative displacement with a tolerance, or an angle or distance at which the same function is obtained.

To explain the present disclosure, it will be described below based on a spatial orthogonal coordinate system with X, Y, and Z axes orthogonal to each other. Each axis direction (X-axis direction, Y-axis direction, Z-axis direction) refers to both directions in which each axis extends.

The X-direction, Y-direction, and Z-direction mentioned below are for explanation so that the present disclosure may be clearly understood, and of course, the directions may be defined differently depending on where the reference is placed.

The use of terms such as 'first, second, and third' in front of the components mentioned below is only to avoid confusion about the components to which they are referred and is irrelevant to the order, importance, or master-slave relationship between the components, etc. For example, an invention that includes only a second component without a first component may also be implemented.

As used in this specification, singular expressions include plural expressions unless the context clearly dictates otherwise.

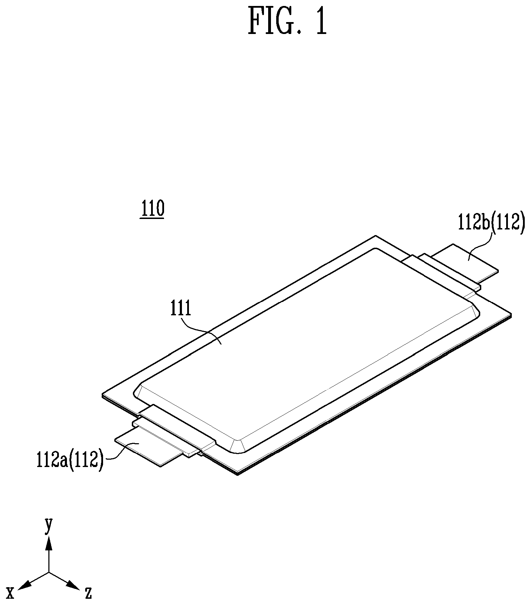

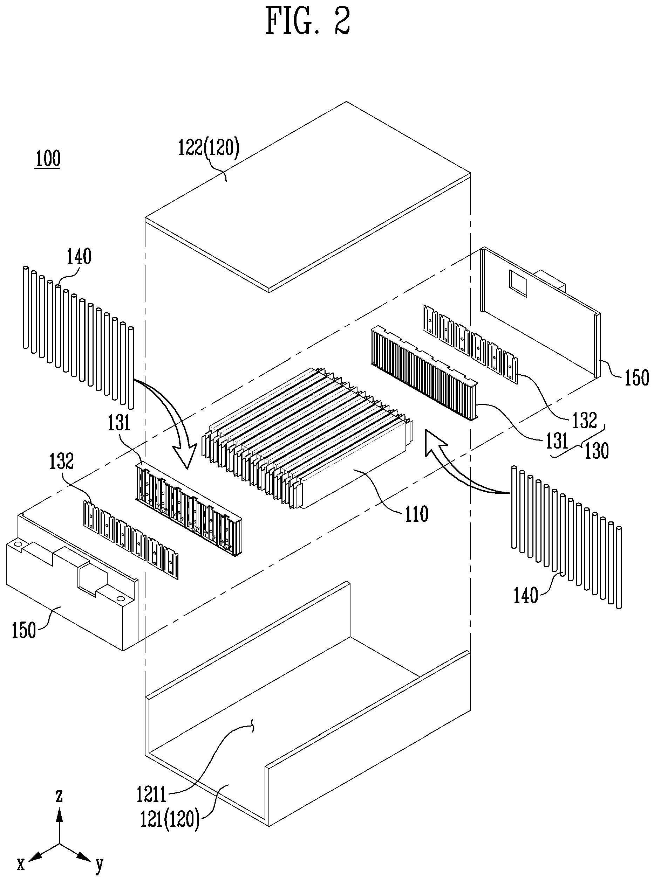

FIG. 1 shows a diagram illustrating a battery cell 110 according to one embodiment of the present disclosure, and FIG. 2 shows a diagram illustrating a battery assembly 100 according to one embodiment of the present disclosure.

The battery cell 110 described herein refers to a secondary battery that may be repeatedly used by charging and discharging electric energy. For example, it may refer to a lithium secondary battery or a lithium ion battery, but is not limited thereto. As another example, it may refer to an all-solid-state battery.

Battery cells 110 may be classified into a pouch-type secondary battery, a prismatic secondary battery, or a cylindrical secondary battery depending on its shape. A pouch-type secondary battery is illustrated herein as an example for convenience of explanation, but is not limited thereto.

Referring to FIG. 1, a battery cell 110 may include a main body portion 111 and a tab portion 112. A main body portion 111 may store and supply electric energy. A main body portion 111 may include a cathode and an anode. For example, a main body portion 111 may include an electrode assembly formed by stacking a cathode and an anode.

A cathode may include a cathode active material, and an anode may include an anode active material. A cathode active material may be a material which lithium ions may be inserted into and extracted from, and an anode active material may be a material which lithium ions may be absorbed into and extracted from.

A tab portion 112 may be formed to protrude outwardly of a main body portion 111. A tab portion 112 may be connected to each of a cathode and an anode and may protrude outwardly of a main body portion 111. A tab portion 112 may include a cathode tab 112a connected to a cathode and an anode tab 112b connected to an anode.

In an embodiment, a cathode tab 112a and an anode tab 112b may protrude in opposite directions. For example, referring to FIG. 1, a cathode tab 112a may protrude along the +X direction, and an anode tab 112b may protrude along the -X direction.

A tab portion 112 may electrically connect a main body portion 111 to the outside. A tab portion 112 may be connected to each of a cathode and an anode of a main body portion 111 to supply electric energy stored in the main body portion 111 to the outside.

Meanwhile, a battery assembly 100 described herein refers to battery cells 110 grouped into one or more groups and placed in a case to protect the battery cells from external impact, heat, vibration, and the like and to impart high-output and high-capacity properties. For example, a battery assembly 100 may refer to a battery module or a battery pack. For convenience of explanation, a battery module is described herein as an example of a battery assembly 100.

Referring to FIG. 2, a battery assembly 100 of the present disclosure may include a plurality of battery cells 110 and an accommodating housing 120 accommodating the same therein. This is to protect a plurality of battery cells 110 from external foreign substances or impacts and assemble them into a single unit.

A accommodating housing 120 may include an accommodating body 121 accommodating a plurality of battery cells 110 and an accommodating cover 122 coupled to the accommodating body 121 to form a space in which the plurality of battery cells 110 are accommodated together with the accommodating body 121.

An accommodating body 121 may include an opening 1211 that is open upward and may accommodate a plurality of battery cells 110 through the opening 1211. An accommodating cover 122 may be coupled to an accommodating body 121 to close an opening 1211.

A battery assembly 100 may further include an end cover 150. An end cover 150 may be coupled to both sides of an accommodating body 121 to form one side surface of an accommodation space. For example, an end cover 150 may be coupled to an accommodating body 121 along the X-direction.

As a result, a battery assembly 100 may form a hexahedron by an accommodating housing 120 and an end cover 150. Through this structure, a battery cell 110 positioned in the inside may be efficiently protected from external impact.

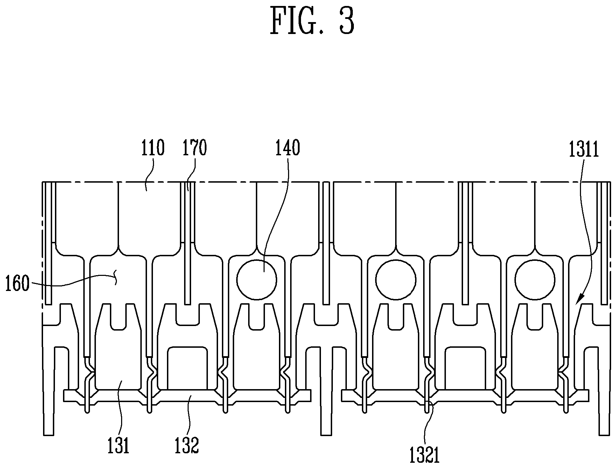

A battery assembly 100 of the present disclosure may further include a busbar assembly 130. A busbar assembly 130 may be positioned inside an accommodating housing 120 and include a through-hole 1311 (FIG. 3) formed on one surface thereof, and a tab portion 112 may be inserted into the through-hole 1311. A busbar assembly 130 may electrically connect at least a part of a plurality of battery cells 110 to each other.

A busbar assembly 130 may include a busbar plate 131 and a busbar 132. A busbar plate 131 may extend along a direction in which a plurality of battery cells 110 are stacked. A plurality of battery cells 110 may be positioned so that their wide surfaces face each other to improve stacking efficiency. For example, referring to FIG. 2, a plurality of battery cells 110 may be stacked along the Y-direction.

A busbar plate 131 may be positioned to face a tab portion 112 provided on each of a plurality of battery cells 110. As a result, a busbar plate 131 may be positioned to face a tab portion 112 and have a rectangular shape extending along the stacking direction of battery cells 110. A plurality of busbar plates 131 may be provided.

A busbar plate 131 may include a through-hole 1311 for a tab portion 112 to be inserted therethrough. A through-hole 1311 may be provided in a slit shape with one side open, but is not limited thereto. A tab portion 112 may be inserted through the through-hole 1311, thereby connecting a plurality of battery cells 110 and a busbar plate 131.

A busbar 132 may be coupled to one surface of a busbar plate 131. In an embodiment, a busbar plate 131 may include a first surface facing a tab portion 112 of a plurality of battery cells 110 and a second surface opposite to the first surface. A busbar 132 may be provided on a second surface of a busbar plate 131.

A busbar 132 may include an insertion hole 1321 (FIG. 3). A tab portion 112 may be inserted into an insertion hole 1321. Through this, a tab portion 112 and a busbar 132 may be electrically connected. An insertion hole 1321 may be provided at a position corresponding to a through-hole 1311 along the insertion direction of a tab portion 112. This is to insert a tab portion 112 also into a busbar 132 after the tab portion is inserted into a the busbar plate 131. As a result, a tab portion 112 may be inserted into each of a busbar plate 131 and a busbar 132.

A busbar assembly 130 may include at least one busbar 132. Through this, a plurality of battery cells 110 may be electrically connected in series or in parallel.

A battery assembly 100 of the present disclosure may include a flame retardant portion 140. A flame retardant portion 140 may be positioned in an insertion space 160 formed between a main body portion 111 and a busbar assembly 130 by tab portions 112 of two adjacent battery cells 110 among a plurality of battery cells 110. A flame retardant portion 140 may be provided in a pillar shape and occupy most of the area of an insertion space 160.

Referring to FIG. 2, a flame retardant portion 140 may be positioned between a busbar plate 131 and a main body portion 111. In addition, a flame retardant portion 140 may be positioned between tap portions 112 of any one battery cell 110 among a plurality of battery cells 110 and of another adjacent battery cell 110. In other words, a flame retardant portion 140 may occupy an insertion space 160 formed between tab portions 112 of two adjacent battery cells 110.

When a fire occurs in one battery cell 110, the fire may be rapidly propagated to adjacent battery cells 110. In particular, a fire may be propagated through empty spaces within a battery assembly 100. To prevent this, it is necessary to fill the empty spaces within a battery assembly 100 with a flame retardant material. The present disclosure can prevent fire propagation by filling an insertion space 160, which is an empty space within a battery assembly 100, with a flame retardant portion 140.

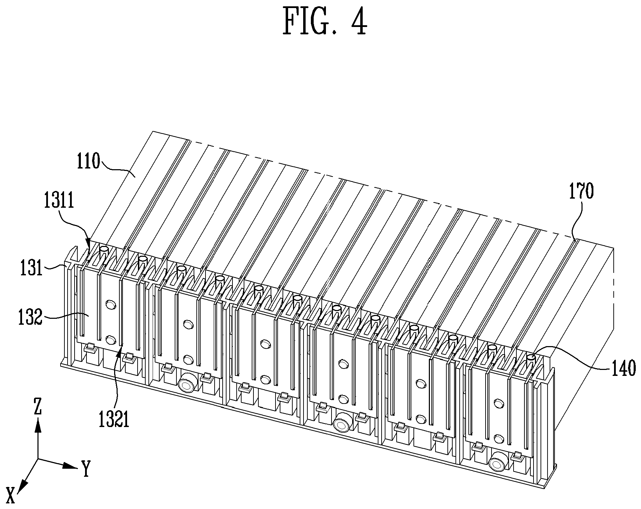

FIGS. 3 and 4 show diagrams illustrating one cross-section of a battery assembly 100 according to one embodiment of the present disclosure.

Specifically, FIGS. 3 and 4 illustrate tab portions 112 of a plurality of battery cells 110 inserted into a busbar assembly 130. A tab portion 112 may be inserted into a through-hole 1311 and an insertion hole 1321 to be connected to a busbar assembly 130. At this time, an insertion space 160 may be formed by a tab portion 112 of two adjacent battery cells 110, a main body portion 111, and a busbar assembly 130. Referring to FIG. 3, a plurality of insertion spaces 160 may be formed.

A flame retardant portion 140 may be positioned in an insertion space 160. A flame retardant portion 140 may occupy an area of an insertion space 160 to prevent a fire from being propagated. A flame retardant portion 140 may block a path through which a fire is propagated. A flame retardant portion 140 may be formed in a pillar shape.

A flame retardant portion 140 may be provided in a shape corresponding to an insertion space 160 of an accommodating body 121. In an embodiment, a flame retardant portion 140 may be in contact with at least one of a tab portion 112, a main body portion 111, and a busbar assembly 130.

Referring to FIG. 4, a flame retardant portion 140 may be positioned on a accommodating body 121. A flame retardant portion 140 may be fixed to an accommodating body 121, but is not limited thereto. A flame retardant portion 140 may be in contact with an accommodating body 121.

Meanwhile, a battery assembly 100 of the present disclosure may further include a blocking portion 170. A blocking portion 170 may be positioned between a plurality of battery cells 110. A blocking portion 170 may be stacked together with a plurality of battery cells 110 along a direction in which the plurality of battery cells 110 are stacked. Referring to FIG. 3, a blocking portion 170 may be positioned between two adjacent battery cells 110. A blocking portion 170 may be formed of a flame retardant material to prevent fire propagation.

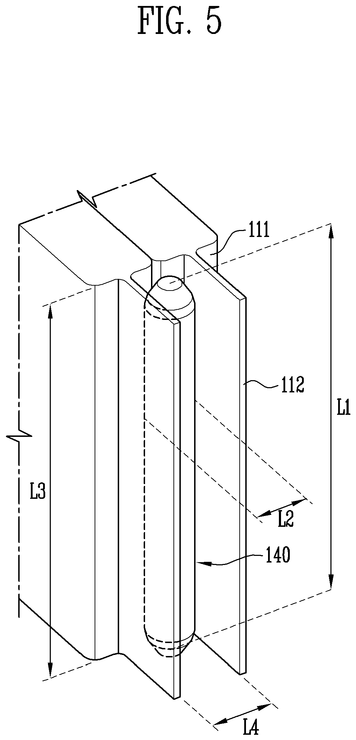

FIG. 5 shows a diagram illustrating a battery cell 110 and a flame retardant portion 140 according to one embodiment of the present disclosure.

A flame retardant portion 140 may be provided in a pillar shape. A flame retardant portion 140 may extend along the height direction formed perpendicular to a protruding direction of a tab portion 112 and a stacking direction in which a plurality of battery cells 110 are stacked. Referring to FIG. 5, the height direction refers to the Z-direction. In other words, a flame retardant portion 140 may extend along the Z-direction to occupy an insertion space 160 inside a battery assembly 100.

The length L1 of a flame retardant portion 140 along the height direction may be less than or equal to the length L3 of a main body portion 111. When the length L1 of a flame retardant portion 140 along the height direction is provided to be longer than the length L3 of a main body portion 111, a flame retardant portion 140 may protrude outwardly from the main body portion 111. This may reduce the ease of assembly and make it difficult to efficiently use the space. Therefore, a flame retardant portion 140 may be provided preferably with a length less than or equal to the length of a main body portion 111.

The length of a flame retardant portion 140 along the height direction may be 80% or more of the length of a main body portion 111. When the length of a flame retardant portion 140 is less than 80% of the length of a main body portion 111, a fire may still be propagated to a remaining space of an insertion space 160, and the fire may not be prevented from being propagated.

The length L2 of a flame retardant portion along the stacking direction in which a plurality of battery cells are stacked may be less than or equal to the ha L4 between tab portions provided in each of two adjacent battery cells among the plurality of battery cells.

Referring to FIG. 5, since battery cells 110 are stacked along the Y-direction, the stacking direction refers to the Y-direction. As described above, the length of a flame retardant portion 140 along the Y-direction should be less than or equal to the gap between tab portions so that the flame retardant portion 140 may be stably positioned in an insertion space 160.

Meanwhile, the length of a flame retardant portion 140 along the Y-direction may preferably be more than half the gap between tab portions. Through this shape, a flame retardant portion 140 may occupy most of the space of an insertion space 160 and delay the propagation of a fire.

Ultimately, it is preferable that a flame retardant portion 140 is provided in a shape to occupy most of the area of an insertion space 160, thereby physically blocking the path through which a fire is propagated.

To minimize damage caused by a flame retardant portion 140, it may be preferable for the flame retardant portion 140 to have a smooth and rounded surface. For example, it may be preferable for a flame retardant portion 140 not to include sharp corners, such as those of a rectangular cuboid.

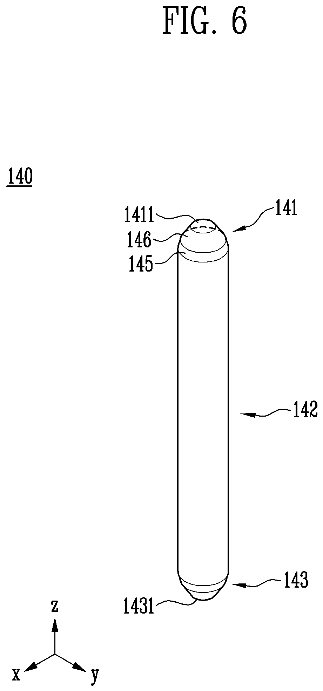

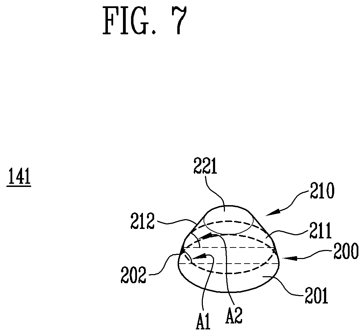

FIG. 6 shows a diagram illustrating a flame retardant portion 140 according to one embodiment of the present disclosure, and FIG. 7 shows a diagram illustrating a head portion according to one embodiment of the present disclosure.

Referring to FIG. 6, a flame retardant portion 140 may include a head portion 141, a body portion 142, and a floor portion 143. A head portion 141 may be formed at one end of a flame retardant portion 140, and a floor portion 143 may be formed at the other end of the flame retardant portion 140 opposite the one end. A body portion 142 may connect a head portion 141 and a floor portion 143.

Referring to FIGS. 3 to 5 again, a floor portion 143 may be positioned toward an accommodating body 121, and a head portion 141 may be positioned toward an accommodating cover 122. In addition, a body portion 142 may extend in the Z-direction, which is the height direction, so that the shape of a flame retardant portion 140 may correspond to the shape of an insertion space 160.

Meanwhile, the cross-sectional area of a head portion 141 and a floor portion 143 may decrease along directions towards each outermost side from a body portion 142. For example, referring to FIG. 6, the direction from a body portion 142 to the outermost side of a head portion 141 refers to the +Z-direction. In addition, this may refer to the direction from a body portion 142 to a head portion 141.

The cross-sectional area of a head portion 141 may decrease along the +Z-direction. The cross-sectional area of a head portion 141 refers to the area of a virtual cross-section cut through the head portion 141 along a direction perpendicular to the direction from a body portion 142 to the outermost side of the head portion 141. In other words, the cross-sectional area of a head portion 141 refers to the area of a virtual cross-section cut through the head portion 141 along the XY plane.

A head portion 141 may include a first cross-section 145 positioned relatively close to a body portion 142 and a second cross-section 146 positioned close to the outermost side. At this time, the cross-sectional area of the first cross-section 145 may be larger than the cross-sectional area of the second cross-section 146. Through this structure, the side surface of the head portion 141 may be formed smoothly, and damage to a battery assembly 100 caused by a flame retardant portion 140 may be minimized.

Referring to the above description, the cross-sectional area of a floor portion 143 may decrease along the -Z-direction. The cross-sectional area of a floor portion 143 refers to the area of a virtual cross-section that cuts through the floor portion 143 along a direction perpendicular to the direction toward the outermost side of the floor portion 143 from a body portion 142.

A head portion 141 and a floor portion 143 may each include a flat surface formed perpendicular to the direction in which a body portion 142 extends. This is to minimize damage to a battery assembly 100 and to stably maintain a flame retardant portion 140 in the battery assembly 100.

Referring to FIG. 6, a body portion 142 may extend along the Z-direction, and an XY plane may be formed perpendicular to the Z-direction. A head portion 141 may include one surface parallel to the XY plane. In addition, a floor portion 143 may also include one surface parallel to the XY plane.

In an embodiment, a head portion 141 and a floor portion 143 may include a cone shape having one truncated end including a vertex. A head portion 141 and a floor portion 143 may each include a plurality of cone shapes having one truncated end including a vertex. The bottoms and edges of the plurality of cones may each have different angles.

FIG. 7 illustrates a head portion and describes the head portion 141, but the description may also be applied to a floor portion 143. Specifically, since a head portion 141 and a floor portion 143 have shapes that are upside down along the Z-direction, when applying the description of the head portion to the floor portion, the description may be applied in the opposite direction to the description of the head portion in the Z-direction. In other words, The head portion 141 has an identical shape as the floor portion 143.

Referring to FIG. 7, a head portion 141 may include a first head portion 200 and a second head portion 210. Similarly, a floor portion 143 may include a first floor portion (not shown) and a second floor portion (not shown).

A first head portion 200 and a second head portion 210 may each have a truncated cone shape including a vertex. A first head portion 200 may include a first lower surface 201 and a first upper surface 211 positioned above the first lower surface 201 along the Z-direction. A first lower surface 201 and a first upper surface 211 may be positioned parallel.

A first head portion 200 may include a first side surface 202 connecting a first lower surface 201 and a first upper surface 211. A second head portion 210 may include a second lower surface 211 and a second upper surface 221 positioned above the second lower surface 211 along the Z-direction. A second head portion may include a second side surface 212 connecting a second lower surface 211 and a second upper surface 221.

A first head portion 200 and a second head portion 210 may be formed to be connected to each other. As a result, a first head portion and a second head portion may share a cross-section 211. A cross section 211 may form a first upper surface 211 of a first head portion 200 and a second lower surface 211 of the second head portion 210. In other words, a first upper surface 211 and a second lower surface 211 may refer to a same surface.

The angle A1 formed by a first lower surface 201 and a first side surface 202 may be formed to be larger than the angle A2 formed by a second lower surface 211 and a second side surface 212. In other words, a first side surface may be formed to have a steeper slope than a second side surface with respect to the XY plane. As the slope becomes more gentle toward the outermost side along the Z-direction, a side surface of a head portion may be formed without being sharp, and damage caused by collision between a head portion and adjacent components can be minimized.

In an embodiment, a cross-section of a second surface 211 orthogonally projected toward the XY plane may be positioned within a first surface 201. In addition, the area of a second surface 211 may be formed to be smaller than the area of a first surface 201. Through this, a slope may be formed gently toward the outermost side along the Z-direction, and a stable structure may be formed.

In an embodiment, a head portion 141 and a floor portion 143 may have a side surface formed as a curved surface, and may each include one surface 1411 and 1431 provided flat.

A flame retardant portion 140 may be symmetrical with respect to an imaginary plane parallel to the XY plane. In other words, a floor portion 143 and a head portion 141 may be formed symmetrically. Through this, a floor portion 143 may be positioned so that it faces an accommodating cover 122 and a head portion 141 faces an accommodating body 121. A floor portion 143 and a head portion 141 may be provided symmetrically, so that the assembly efficiency of a battery assembly 100 can be improved. When a floor portion 143 and a head portion 141 are distinguished, the floor portion 143 should be inserted so that it faces an accommodating body 121.

In contrast, when a floor portion 143 and a head portion 141 are provided symmetrically, a flame retardant portion 140 may be inserted simply into an insertion space 160 without having to distinguish between the floor portion 143 and the head portion 141.

In addition, it may be preferable for a flame retardant portion 140 to have a shape symmetrical with respect to an imaginary plane parallel to the XZ plane, and it may be preferable for a flame retardant portion 140 to have a shape symmetrical with respect to an imaginary plane parallel to the YZ plane.

An outer surface of a body portion 142 may be formed as a curved surface. As described above, this is to minimize damage to a battery assembly 100 caused by a flame retardant portion 140. When a body portion 142 has an angled corner, damage may occur to an assembly due to the corner. When a body portion 142 is formed as a curved surface, the pressure applied to adjacent components may be distributed, and damage caused by collision with a flame retardant portion 140 may be minimized.

For example, a body portion 142 may be provided as a cylinder. As a result, a head portion 141 and a floor portion 143 of a flame retardant portion 140 may be provided as at each of both ends of a body portion 142 provided as a cylinder.

A flame retardant portion 140 may include a fire-resistant and flame-retardant material to minimize the propagation of fire. A flame retardant portion 140 may include a material having a flame retardancy rating of V-0 or higher according to the UL94 standard. The UL94 standard classifies flame retardancy ratings according to a test that evaluates flame retardancy of plastics. The flame retardancy ratings may be classified into HB, V2, V1, V0, and 5V, with V2 rating materials having the lowest flame retardancy and thus being flammable, and 5V rating materials having the highest flame retardancy and thus being non-flammable.

The flame retardant portion 140 of the present disclosure may include a material having a V0 rating or higher. A flame retardant portion 140 may include a flame retardant material classified as a V0 rating or a 5V rating. For example, a flame retardant portion 140 may include at least one material of flame retardant polyurethane, silicone, modified polyphenylene oxide (MPPO), polypropylene, polyoxymethylene, acetal, polyamide 6, polyamide 6-6, and polycarbonate.

## Claims

1. A battery assembly (100) comprising:
a plurality of battery cells (110), which each include a main body portion (111) storing and supplying electric energy and a tab portion (112) protruding outwardly from the main body portion (111) and electrically connecting the main body portion (111) and the outside and are stacked along one direction;
an accommodating housing (120) accommodating the plurality of battery cells (110) therein;
a busbar assembly (130) positioned inside the accommodating housing (120) and including a through-hole (1311) formed on one surface thereof, wherein the tab portion (112) is inserted into the through-hole (1311) to electrically connect at least a part of the plurality of battery cells (110) to each other; said battery assembly (100) being **characterised by**
a pillar-shaped flame retardant portion (140) positioned in an insertion space (160) formed between the main body portion (111) and the busbar assembly (130) by tab portions (112) of two adjacent battery cells (110) among the plurality of battery cells (110).

2. The battery assembly (100) according to claim 1, wherein the accommodating housing (120) includes an accommodating body (121) supporting the plurality of battery cells (110); and
an accommodating cover (122) coupled to the accommodating body (121) and covering the plurality of battery cells (110),
wherein the flame retardant portion (140) is positioned on the accommodating body (121).

3. The battery assembly (100) according to claim 2, wherein the flame retardant portion (140) is in contact with the accommodating body (121).

4. The battery assembly (100) according to according to any one of claims 1 to 3, wherein the length of the flame retardant portion (140) is less than or equal to the length of the main body portion (111) along the height direction formed perpendicular to the protruding direction of the tab portion (112) and the stacking direction in which the plurality of battery cells (110) are stacked.

5. The battery assembly (100) according to claim 4, wherein the length of the flame retardant portion (140) is 80% or more of the length of the main body portion (111) along the height direction formed perpendicular to the protruding direction of the tab portion (112) and the stacking direction in which the plurality of battery cells (110) are stacked.

6. The battery assembly (100) according to any one of claims 1 to 5, wherein the length of the flame retardant portion (140) is less than or equal to a gap between tab portions (112) provided in each of two adjacent battery cells (110) among the plurality of battery cells (110) along the stacking direction in which the plurality of battery cells (110) are stacked.

7. The battery assembly (100) according to any one of claims 1 to 6, wherein the flame retardant portion (140) includes: a head portion (141) formed at one end; a floor portion (143) formed at the other end opposite to the one end; and a body portion (142) connecting the head portion (141) and the floor portion (143), wherein the head portion (141) and the floor portion (143) have a shape in which the cross-sectional area decreases along the direction toward each of the outermost sides of the body portion (142).

8. The battery assembly (100) according to claim 7, wherein the head portion (141) and the floor portion (143) each include one flat surface formed perpendicular to the direction in which the body portion (142) extends.

9. The battery assembly (100) according to claim 8, wherein the head portion (141) and the floor portion (143) each include a cone shape having one truncated end including a vertex.

10. The battery assembly (100) according to claim 8 or 9, the head portion (141) has the same shape as the floor portion (143).

11. The battery assembly (100) according to any one of claims 7 to 10, wherein the body portion (142) has an outer surface formed into a curved surface.

12. The battery assembly (100) according to claim 11, wherein the body portion (142) is provided in the form of a cylinder.

13. The battery assembly (100) according to any one of the preceding claims, wherein the flame retardant portion (140) includes a material having a flame retardancy rating of V0 or higher according to UL94 standards.

14. The battery assembly according to claim 13, wherein the flame retardant portion includes at least one material of flame retardant polyurethane, silicone, modified polyphenylene oxide (MPPO), polypropylene, polyoxymethylene, acetal, polyamide 6, polyamide 6-6, or polycarbonate.

## Patentansprüche

1. Batterieanordnung (100), umfassend:
eine Vielzahl von Batteriezellen (110), die jeweils einen Hauptkörperabschnitt (111), der elektrische Energie speichert und zuführt, und einen Laschenabschnitt (112), der von dem Hauptkörperabschnitt (111) nach außen vorsteht und den Hauptkörperabschnitt (111) und die Außenseite elektrisch verbindet, enthalten und entlang einer Richtung gestapelt sind;
ein Aufnahmegehäuse (120), das die Vielzahl von Batteriezellen (110) darin aufnimmt;
eine Sammelschienenanordnung (130), die innerhalb des Aufnahmegehäuses (120) positioniert ist und ein Durchgangsloch (1311) enthält, das auf einer Oberfläche davon ausgebildet ist, wobei der Laschenabschnitt (112) in das Durchgangsloch (1311) eingesetzt ist, um mindestens einen Teil der Vielzahl von Batteriezellen (110) elektrisch miteinander zu verbinden; wobei die Batterieanordnung (100) **gekennzeichnet ist durch**
einen säulenförmigen flammenhemmenden Abschnitt (140), der in einem Einsetzraum (160) positioniert ist, der zwischen dem Hauptkörperabschnitt (111) und der Sammelschienenanordnung (130) durch Laschenabschnitte (112) von zwei benachbarten Batteriezellen (110) unter der Vielzahl von Batteriezellen (110) ausgebildet ist.

2. Batterieanordnung (100) gemäß Anspruch 1, wobei das Aufnahmegehäuse (120) einen Aufnahmekörper (121) enthält, der die Vielzahl von Batteriezellen (110) lagert; und
eine Aufnahmeabdeckung (122), die mit dem Aufnahmekörper (121) verbunden ist und die Vielzahl von Batteriezellen (110) abdeckt,
wobei der flammenhemmende Abschnitt (140) auf dem Aufnahmekörper (121) positioniert ist.

3. Batterieanordnung (100) gemäß Anspruch 2, wobei der flammenhemmende Abschnitt (140) mit dem Aufnahmekörper (121) in Kontakt ist.

4. Batterieanordnung (100) gemäß einem der Ansprüche 1 bis 3, wobei die Länge des flammenhemmenden Abschnitts (140) kleiner oder gleich der Länge des Hauptkörperabschnitts (111) entlang der Höhenrichtung, die senkrecht zu der Vorstehrichtung des Laschenabschnitts (112) ausgebildet ist, und der Stapelrichtung, in der die Vielzahl von Batteriezellen (110) gestapelt sind, ist.

5. Batterieanordnung (100) gemäß Anspruch 4, wobei die Länge des flammenhemmenden Abschnitts (140) 80 % oder mehr der Länge des Hauptkörperabschnitts (111) entlang der Höhenrichtung, die senkrecht zu der Vorstehrichtung des Laschenabschnitts (112) ausgebildet ist, und der Stapelrichtung, in der die Vielzahl von Batteriezellen (110) gestapelt sind, ist.

6. Batterieanordnung (100) gemäß einem der Ansprüche 1 bis 5, wobei die Länge des flammenhemmenden Abschnitts (140) kleiner oder gleich einer Lücke zwischen Laschenabschnitten (112), die in jeder von zwei benachbarten Batteriezellen (110) unter der Vielzahl von Batteriezellen (110) vorgesehen sind, entlang der Stapelrichtung, in der die Vielzahl von Batteriezellen (110) gestapelt sind, ist.

7. Batterieanordnung (100) gemäß einem der Ansprüche 1 bis 6, wobei der flammenhemmende Abschnitt (140) enthält: einen Kopfabschnitt (141), der an einem Ende ausgebildet ist; einen Bodenabschnitt (143), der an dem anderen Ende gegenüber dem einen Ende ausgebildet ist; und einen Körperabschnitt (142), der den Kopfabschnitt (141) und den Bodenabschnitt (143) verbindet, wobei der Kopfabschnitt (141) und der Bodenabschnitt (143) eine Form aufweisen, in der die Querschnittsfläche entlang der Richtung zu jeder der äußersten Seiten des Körperabschnitts (142) abnimmt.

8. Batterieanordnung (100) gemäß Anspruch 7, wobei der Kopfabschnitt (141) und der Bodenabschnitt (143) jeweils eine flache Oberfläche enthalten, die senkrecht zu der Richtung, in der sich der Körperabschnitt (142) erstreckt, ausgebildet ist.

9. Batterieanordnung (100) gemäß Anspruch 8, wobei der Kopfabschnitt (141) und der Bodenabschnitt (143) jeweils eine Kegelform mit einem abgestumpften Ende, das einen Scheitelpunkt enthält, enthalten.

10. Batterieanordnung (100) gemäß Anspruch 8 oder 9, wobei der Kopfabschnitt (141) die gleiche Form wie der Bodenabschnitt (143) aufweist.

11. Batterieanordnung (100) gemäß einem der Ansprüche 7 bis 10, wobei der Körperabschnitt (142) eine äußere Oberfläche aufweist, die zu einer gekrümmten Oberfläche ausgebildet ist.

12. Batterieanordnung (100) gemäß Anspruch 11, wobei der Körperabschnitt (142) in der Form eines Zylinders bereitgestellt ist.

13. Batterieanordnung (100) gemäß einem der vorhergehenden Ansprüche, wobei der flammenhemmende Abschnitt (140) ein Material enthält, das eine Flammenhemmungsbewertung von V0 oder höher gemäß UL94-Standards aufweist.

14. Batterieanordnung gemäß Anspruch 13, wobei der flammenhemmende Abschnitt mindestens ein Material aus flammenhemmendem Polyurethan, Silikon, modifiziertem Polyphenylenoxid (MPPO), Polypropylen, Polyoxymethylen, Acetal, Polyamid 6, Polyamid 6-6 oder Polycarbonat enthält.

## Revendications

1. Ensemble de batterie (100) comprenant :
une pluralité de cellules de batterie (110), qui comprennent chacune une partie de corps principal (111) stockant et fournissant de l'énergie électrique et une partie de languette (112) faisant saillie vers l'extérieur à partir de la partie de corps principal (111) et connectant électriquement la partie de corps principal (111) et l'extérieur et sont empilées le long d'une direction ;
un boîtier de logement (120) logeant la pluralité de cellules de batterie (110) à l'intérieur de celui-ci ;
un ensemble de barre omnibus (130) positionné à l'intérieur du boîtier de logement (120) et comprenant un trou traversant (1311) formé sur une surface de celui-ci, où la partie de languette (112) est insérée dans le trou traversant (1311) pour connecter électriquement au moins une partie de la pluralité de cellules de batterie (110) les unes aux autres ; ledit ensemble de batterie (100) étant **caractérisé par**
une partie ignifuge en forme de pilier (140) positionnée dans un espace d'insertion (160) formé entre la partie de corps principal (111) et l'ensemble de barre omnibus (130) par des parties de languette (112) de deux cellules de batterie adjacentes (110) parmi la pluralité de cellules de batterie (110).

2. Ensemble de batterie (100) selon la revendication 1, où le boîtier de logement (120) comprend un corps de logement (121) supportant la pluralité de cellules de batterie (110) ; et
un couvercle de logement (122) couplé au corps de logement (121) et recouvrant la pluralité de cellules de batterie (110),
où la partie ignifuge (140) est positionnée sur le corps de logement (121).

3. Ensemble de batterie (100) selon la revendication 2, où la partie ignifuge (140) est en contact avec le corps de logement (121).

4. Ensemble de batterie (100) selon l'une quelconque des revendications 1 à 3, où la longueur de la partie ignifuge (140) est inférieure ou égale à la longueur de la partie de corps principal (111) le long de la direction de hauteur formée perpendiculairement à la direction de saillie de la partie de languette (112) et la direction d'empilement dans laquelle la pluralité de cellules de batterie (110) sont empilées.

5. Ensemble de batterie (100) selon la revendication 4, où la longueur de la partie ignifuge (140) est 80 % ou plus de la longueur de la partie de corps principal (111) le long de la direction de hauteur formée perpendiculairement à la direction de saillie de la partie de languette (112) et la direction d'empilement dans laquelle la pluralité de cellules de batterie (110) sont empilées.

6. Ensemble de batterie (100) selon l'une quelconque des revendications 1 à 5, où la longueur de la partie ignifuge (140) est inférieure ou égale à un espace entre des parties de languette (112) prévues dans chacune de deux cellules de batterie adjacentes (110) parmi la pluralité de cellules de batterie (110) le long de la direction d'empilement dans laquelle la pluralité de cellules de batterie (110) sont empilées.

7. Ensemble de batterie (100) selon l'une quelconque des revendications 1 à 6, où la partie ignifuge (140) comprend : une partie de tête (141) formée à une extrémité ; une partie de plancher (143) formée à l'autre extrémité opposée à la une extrémité ; et une partie de corps (142) connectant la partie de tête (141) et la partie de plancher (143), où la partie de tête (141) et la partie de plancher (143) ont une forme dans laquelle la section transversale diminue le long de la direction vers chacun des côtés les plus extérieurs de la partie de corps (142).

8. Ensemble de batterie (100) selon la revendication 7, où la partie de tête (141) et la partie de plancher (143) comprennent chacune une surface plate formée perpendiculairement à la direction dans laquelle la partie de corps (142) s'étend.

9. Ensemble de batterie (100) selon la revendication 8, où la partie de tête (141) et la partie de plancher (143) comprennent chacune une forme de cône ayant une extrémité tronquée comprenant un sommet.

10. Ensemble de batterie (100) selon la revendication 8 ou 9, où la partie de tête (141) a la même forme que la partie de plancher (143).

11. Ensemble de batterie (100) selon l'une quelconque des revendications 7 à 10, où la partie de corps (142) a une surface extérieure formée en une surface incurvée.

12. Ensemble de batterie (100) selon la revendication 11, où la partie de corps (142) est prévue sous la forme d'un cylindre.

13. Ensemble de batterie (100) selon l'une quelconque des revendications précédentes, où la partie ignifuge (140) comprend un matériau ayant un taux d'ignifugation de V0 ou plus selon les normes UL94.

14. Ensemble de batterie selon la revendication 13, où la partie ignifuge comprend au moins un matériau de polyuréthane ignifuge, de silicone, d'oxyde de polyphénylène modifié (MPPO), de polypropylène, de polyoxyméthylène, d'acétal, de polyamide 6, de polyamide 6-6, ou de polycarbonate.
